# EUROPÄISCHE PATENTSCHRIFT

(11) **EP 1 654 776 B1**
(45) Veröffentlichungstag und Bekanntmachung des Hinweises auf die Patenterteilung: **11.09.2013**
(21) Anmeldenummer: 04763216.1
(22) Anmeldetag: 14.07.2004
(51) Int. Cl.: H01M 8/02, H01M 8/10, C25B 9/10, C25B 1/10, H01M 4/86, H01M 4/88

(54) **MEMBRAN-ELEKTRODEN-EINHEIT FÜR ELEKTROCHEMISCHE VORRICHTUNGEN**
MEMBRANE ELECTRODE ASSEMBLY FOR USE IN ELECTROCHEMICAL DEVICES
UNITÉ MEMBRANE-ÉLECTRODE POUR DES INSTALLATION ÉLECTROCHMIQUES

(30) Priorität: 14.07.2003 DE 10331836; 30.10.2003 US 699158
(43) Veröffentlichungstag der Anmeldung: 10.05.2006
(73) Patentinhaber: Umicore AG & Co. KG, 63457 Hanau-Wolfgang (DE)
(72) Erfinder: ZUBER, Ralf, 64823 Gross-Umstadt (DE); SCHAACK, Klaus, 63785 Obernburg (DE); WITTPAHL, Sandra, 91074 Herzogenaurach (DE); DZIALLAS, Holger, 63579 Freigericht-Neuses (DE); SEIPEL, Peter, 63755 Alzenau (DE); DILLMANN, Bernd, 64342 Seeheim (DE); VULPIUS, Günther, 64560 Riedstadt (DE)
(74) Vertreter: Vossius & Partner
(86) Internationale Anmeldenummer: PCT/EP2004/007794
(87) Internationale Veröffentlichungsnummer: WO 2005/006473

(56) Entgegenhaltungen:
- EP-A- 0 951 086
- EP-A- 1 289 042
- US-A- 5 187 025
- US-A- 5 464 700
- US-B1- 6 245 454
- PATENT ABSTRACTS OF JAPAN Bd. 1999, Nr. 05, 31. Mai 1999 (1999-05-31) -& JP 11 045729 A (FUJI ELECTRIC CO LTD), 16. Februar 1999 (1999-02-16)
- PATENT ABSTRACTS OF JAPAN Bd. 1998, Nr. 03, 27. Februar 1998 (1998-02-27) & JP 09 289028 A (TANAKA KIKINZOKU KOGYO KK), 4. November 1997 (1997-11-04)

## Beschreibung

Die Erfindung betrifft das technische Gebiet der Elektrochemie und beschreibt eine Membran-Elektroden-Einheit ("MEE") für elektrochemische Vorrichtungen, wie beispielsweise Brennstoffzellen (Membran-Brennstoffzellen, PEMFC, DMFC etc.), Elek-trolyseure oder elektrochemische Sensoren. Des weiteren wird ein Verfahren zur Her-stellung der Membran-Elektroden-Einheit sowie ihre Verwendung beschrieben.

Brennstoffzellen wandeln einen Brennstoff und ein Oxidationsmittel örtlich voneinander getrennt an zwei Elektroden in Strom, Wärme und Wasser um. Als Brennstoff kann Wasserstoff oder ein wasserstoffreiches Gas, als Oxidationsmittel Sauerstoff oder Luft dienen. Der Vorgang der Energieumwandlung in der Brennstoffzelle zeichnet sich durch einen besonders hohen Wirkungsgrad aus. Aus diesem Grunde gewinnen Brennstoffzellen in Kombination mit Elektromotoren zunehmend Bedeutung als Alternative für herkömmliche Verbrennungsmotoren.

Insbesondere die Polymerelektrolyt-Brennstoffzelle (PEM-Brennstoffzelle) eignet sich aufgrund ihrer kompakten Bauweise, ihrer Leistungsdichte sowie ihres hohen Wirkungsgrades für den Einsatz in Elektroautomobilen.

Unter einem PEM-Brennstoffzellenstapel wird im Rahmen dieser Erfindung eine stapelweise Anordnung ("Stack") von Brennstoffzelleneinheiten verstanden. Eine Brennstoffzelleneinheit wird im folgenden auch kurz als Brennstoffzelle bezeichnet. Sie enthält jeweils eine Membran-Elektroden-Einheit (MEE), die zwischen sog. bipolaren Platten, die auch als Separatorplatten bezeichnet werden und zur Gaszufuhr und Stromleitung dienen, angeordnet ist.

Eine Membran-Elektroden-Einheit besteht aus einer ionenleitenden Membran, die auf beiden Seiten mit katalysatorhaltigen Reaktionsschichten, den Elektroden, versehnen ist. Eine der Reaktionsschichten ist als Anode für die Oxidation von Wasserstoff und die zweite Reaktionsschicht als Kathode für die Reduktion von Sauerstoff ausgebildet. Auf diese Katalysatorschichten werden sogenannte Gasverteilersubstrate aus Kohlefaservlies, Kohlefaserpapier oder Kohlefasergewebe aufgebracht. Sie ermöglichen einen guten Zugang der Reaktionsgase zu den Elektroden sowie eine gute Ableitung des Zellenstroms. Anode und Kathode enthalten Elektrokatalysatoren, die die jeweilige Reaktion (Oxidation von Wasserstoff beziehungsweise Reduktion von Sauerstoff) katalytisch unterstützen.

Als katalytisch aktive Komponenten werden bevorzugt die Metalle der Platingruppe des Periodensystems der Elemente eingesetzt. In der Mehrzahl werden sogenannte Trägerkatalysatoren verwendet, bei denen die katalytisch aktiven Platingruppenmetalle in hochdisperser Form auf die Oberfläche eines leitfähigen Trägermaterials aufgebracht wurden. Die mittlere Kristallitgröße der Platingruppenmetalle liegt dabei etwa zwischen 1 und 10 nm. Als Trägermaterialien haben sich feinteilige, leitfähige Ruße bewährt.

Die ionenleitende Membran besteht vorzugsweise aus protonenleitenden Polymermaterialien. Diese Materialien werden im folgenden auch kurz als Ionomere bezeichnet. Bevorzugt wird ein Tetrafluorethylen-Fluorvinylether-Copolymer mit Sulfonsäuregruppen verwendet. Dieses Material wird zum Beispiel unter dem Handelsnamen Nafion^{®} von DuPont vertrieben. Es sind jedoch auch andere, insbesondere fluorfreie Ianomermaterialien, wie dotierte sulfonierte Polyetherketone oder dotierte sulfonierte oder sulfinierte Arylketone sowie dotierte Polybenzimidazole einsetzbar. Geeignete ionenleitende Membranen sind von O. Savadogo in "Journal of New Materials for Electrochemical Systems" I, 47-66 (1998) beschrieben. Für die Verwendung in Brennstoffzellen benötigen diese Membranen im allgemeinen eine Dicke zwischen 10 und 200 µm.

Die vorliegende Erfindung beschreibt Membran-Elektroden-Einheiten (MEEs) mit verbesserten Eigenschaften hinsichtlich der Leistung, der Lebensdauer und der Abdichtung der Gasräume bzw. Gaszuführungen. Die Abdichtung der Gasräume der PEM-Brennstoffzelle gegenüber der Außenluft und gegenüber dem jeweils anderen Reaktivgas ist essentiell für die Sicherheit und für die Anwendung der Brennstoffzellentechnologie.

Schon in US 5,407,759 werden solche Konzepte für Phosphorsäure-Brennstoffzellen (PAFC) beschrieben. Die Zelle enthält Phosphorsäure zwischen einem Paar Elektroden und einen Dichtungsrahmen aus einem Metalloxid und Fluorkautschuk. Ein zusätzliches Dichtungsband ist zwischen Elektrode und Dichtungsrahmen angebracht.

Weitere Aufbaukonzepte für Membran-Elektroden-Einheiten sind in US 3,134,697 und EP 700 108 A2 beschrieben. Diese Konzepte sind dadurch gekennzeichnet, daß die Membran einen über die Elektroden hervorstehenden Rand bildet, der beim Abdichten der Zelle zwischen den Zellplatten und, falls nötig, zwischen weitere Dichtungen eingespannt wird.

Membran-Elektroden-Einheiten (MEEs) mit überstehendem Membranrand sind bei ihrer Herstellung und bei der Montage jedoch empfindlich für mechanische Beschädigungen der Membran. Solche Beschädigungen führen leicht zum Ausfall der Zelle, da die Membran die Gasräume der Reaktivgase Wasserstoff und Sauerstoff voneinander abtrennen muss. Besonders leicht tritt eine Membranschädigung ein, wenn sehr dünne Membranen (d.h. bis zu 25 µm Dicke) eingesetzt werden. Dies führt besonders bei der MEE-Fertigung im kontinuierlichen Verfahren zu Problemen.

Eine weitere Aufbaumethode für MEEs ist in US 3,134,697 offenbart und beschreibt den Einsatz von vorgeschnittenen Rahmen aus Polymermaterial, die rund um die Elektroden zwischen Membran und Bipolarplatten platziert werden.

In EP 0 586 461 B1 werden verschiedene Aufbaugeometrien für abgedichtete Membran-Elektroden-Einheiten vorgeschlagen, bei denen die aus zwei Gasverteilersubstraten und einer Membran gebildete Membran-Elektroden-Einheit mit elastischem Dichtungs-material umfaßt und komprimiert wird. Die Einfassung der MEE mit anschließender Komprimierung kann bei einer Beschädigung bzw. Perforation der Membran zum Ausfall der Zelle führen.

Ein anderes Konzept ist in US 5,176,966 beschrieben. Die porösen, elektrisch leitfähigen, aus Kohlefaserpapier bestehenden Gasverteilersubstrate der Membran-Elektroden-Einheit bedecken die Membran vollständig, d.h. die Membran und die Gasverteilersubstrate weisen die gleichen Abmessungen auf und sind "coextensiv". Die Abdichtung erfolgt durch Imprägnierung der Kohlefasersubstrate ("carbon fiber paper") mit einem Dichtmaterial um die elektrochemische aktive Fläche und um die Öffnungen für Fluidtransport herum.

Die DE 197 03 214 beschreibt eine Membran-Elektroden-Einheit, die ebenfalls ein co-extensives Design aufweist, wobei die Membran auf beiden Oberflächen im wesentlichen vollständig von den Elektroden bzw. Gasverteilersubstraten bedeckt ist. Um den Umfang der Membran-Elektroden-Einheit ist ein integrierter Dichtrand vorgesehen, der den Randbereich mindestens einer Elektrode durchdringt. Das Dichtungsmaterial steht, außer an der Stirnfläche, nicht in Kontakt mit einer freien Membranoberfläche.

EP-A-1 289 042 beschreibt eine Membran-Elektroden-Einheit für eine Brennstoffzelle, wobei die verwendete Ionomermembran über eine der Gasdiffusionsschichten hinausragt.

US-A-5 187 025 offenbart eine elektrochemische Zelle (PEM-Brennstoffzelle), deren Rand mit einer laminierten Plastikstruktur versehen ist.

EP-A-0 951 086 beschreibt eine PEM-Brennstoffzelle mit einfacher Struktur und verbesserten Dichtungseigenschaften.

JP-A-11/045729 beschreibt ein Verfahren zur Herstellung von mehrlagigen Membran-Elektroden-Einheiten mittels Thermokompressions-Bonding.

Die US-B-6 245 454 beschreibt eine Vorrichtung für eine Phosphorsäurebrennstoffzelle.

US-A-5 464 700 offenbart eine Membran-Elektroden-Einheit für eine PEM-Brennstoffzelle, die einen Dichtungsrand aufweist.

Die JP-A-09/289028 beschreibt eine Membran-Elektroden-Einheit für eine PEM-Brennstoffzelle, wobei Polymerfolien mit der Ionomermembran verklebt werden.

Bei den Aufbaukonzepten, die auf dem coextensiven Design basieren (d.h. bei denen im wesentlichen die gesamte Membranfläche durch Gasverteilersubstrate bzw. Elektroden bedeckt und gestützt wird), sind die Pole der Brennstoffzelle (d.h. Anode und Kathode)an ihrem Rand nur um wenige Mikrometer (in der Regel weniger als 100 µm) voneinander getrennt. Beim Schneiden bzw. Vereinzeln der MEEs und bei anderen nachfolgenden Verarbeitungsschritten besteht die Gefahr, daß die Elektroden kurzgeschlossen werden (beispielsweise durch Fasern aus den Gasverteilersubstraten). Dies bedeutet, dass es bei der Fertigung von MEEs nach dem coextensiven Design häufig zu Kurzschlüssen und Ausfällen kommen kann.

Ein weiteres Problem des coextensiven Designs ist die gasdichte Abtrennung der Reaktivgase Sauerstoff (bzw. Luft) und Wasserstoff voneinander. Die Abdichtung würde eine perfekte Imprägnierung des peripheren Gasverteilerrandbereichs erfordern. Diese Imprägnierung muß aber bis zur unter dem Gasverteilersubstrat befindlichen Membran erfolgen, um ein Durchkriechen des Wasserstoffs zum äußeren Rand des Gasverteilersubstrates zu verhindern. Aufgrund der feinen Poren in den Gasverteilersubstraten und Katalysatorschichten ist dies jedoch kaum möglich. Ein direkter Kontakt des Dichtungsmaterials mit einer freiliegenden Fläche der ionenleitenden Membran ist nicht vorhanden. Daher kann es beim co-extensiven Design zu einem erhöhten Durchtritt von Wasserstoff auf die Kathode der Membran-Elektroden-Einheit kommen, was sich in einer Erniedrigung der offenen Zellspannung (OCV) und, damit verbunden, in einer niedrigeren elektrischen Leistung der MEE äußert.

Es war daher die Aufgabe der vorliegenden Erfindung, eine Membran-Elektroden-Einheit bereitzustellen, welche die Nachteile des Standes der Technik überwindet und insbesondere ein verbessertes Aufbaukonzept aufweist.

Diese Aufgabe wird durch die Membran-Elektroden-Einheit gemäß Anspruch 1 gelöst sowie den Ansprüchen 14, 15 und 16. Vorteilhafte Ausführungsformen der Membran-Elektroden-Einheit werden in den Unteransprüchen beschrieben. Weitere Ansprüche sind auf Verfahren zu ihrer Herstellung, sowie auf die Verwendung der erfindungsgemäßen Membran-Elektroden-Einheit in elektrochemischen Vorrichtungen gerichtet.

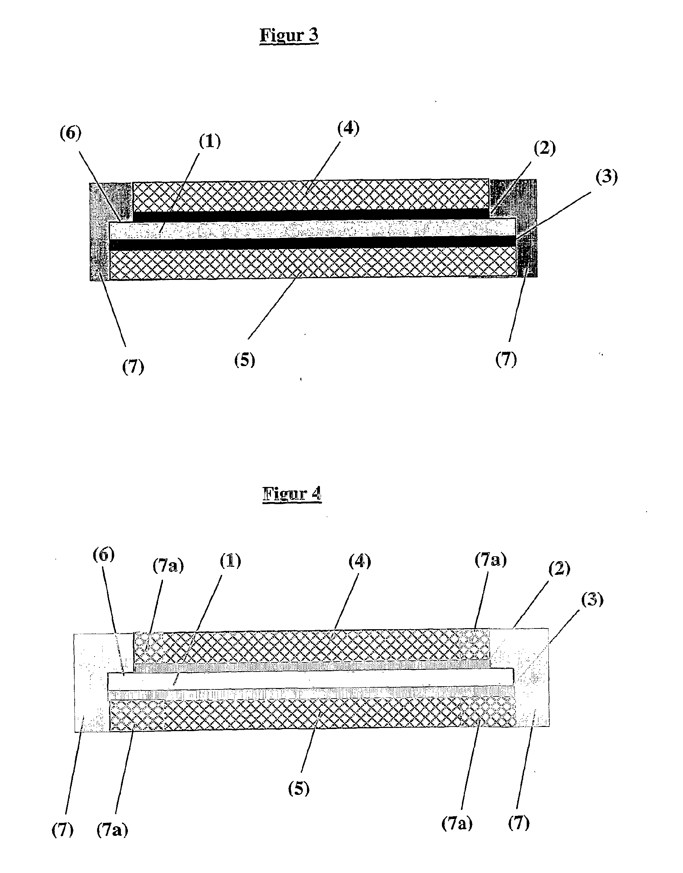

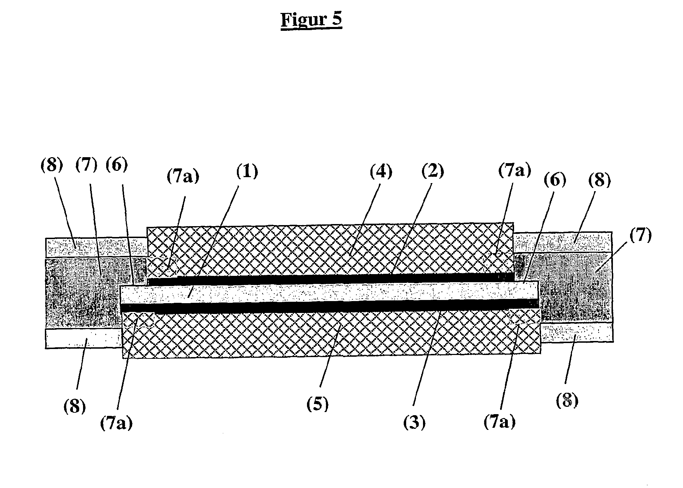

Die erfindungsgemäße Membran-Elektroden-Einheit weist eine ionenleitende Membran auf, die auf Vorder- und Rückseite eine Katalysatorschicht besitzt, welche wiederum jeweils mit einem Gasverteilersubstrat verbunden sind, wobei das erste Gasverteilersubstrat eine geringere flächige Ausdehnung als die ionenleitende Membran aufweist und das zweite Gasverteilersubstrat im wesentlichen deckungsgleich mit der Membran ist. Die erfindungsgemäßen Aufbauten der Membran-Elektroden-Einheit sind in den **Figuren** 4 und 5 schematisch als Schnittbild dargestellt.

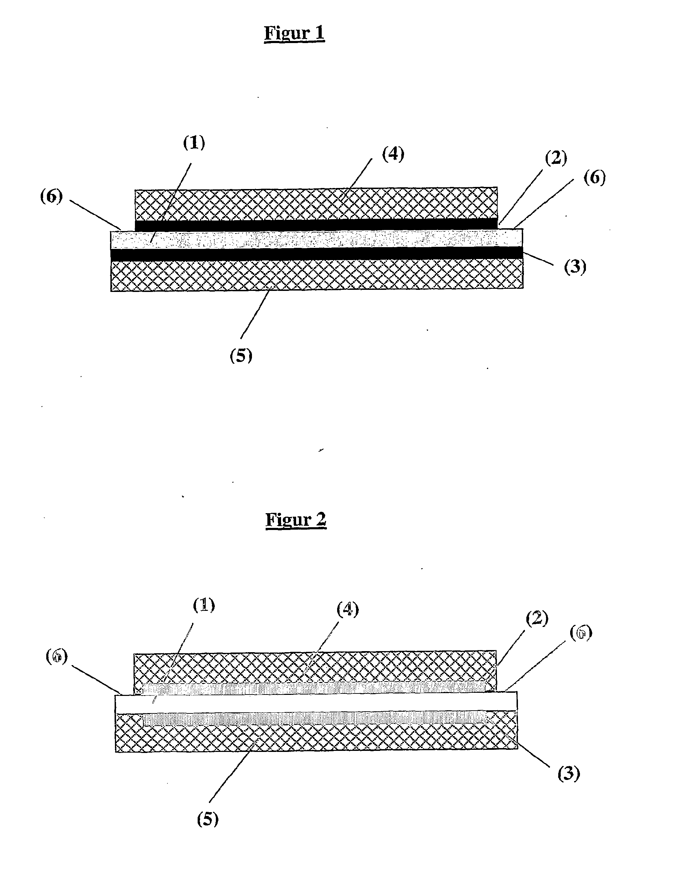

**Figur 1** zeigt eine Membran-Elektroden-Einheit mit sog. "semi-coextensivem" Design. (1) bezeichnet darin die ionenleitende Membran, die auf Vorder- und Rückseite mit den Katalysatorschichten (2) und (3) in Kontakt steht. Die flächige Ausdehnung des ersten Gasverteilersubstrates (4) ist kleiner als die der Membran (1), so daß die Membran (1) auf der Vorderseite eine nicht vom Gasverteilersubstrat (4) gestützte Oberfläche (6) aufweist. Die Unterseite der Membran (1) steht ganzflächig in Kontakt mit der Katalysatorschicht (3), und wird ganzflächig von Gasverteilersubstrat (5) gestützt. Das kleinere Gasverteilersubstrat ist dabei zentriert auf der Membran angeordnet. Der Abstand von der Außenkante des kleineren ersten Gasverteilersubstrates (4) zur Außenkante der größeren zweiten Gasverteilersubstrates (5) in der fertigen Membran-Elektroden-Einheit beträgt mindestens 0,5 mm umlaufend, vorzugsweise mindestens 1 mm. Die Katalysatorschichten (2) und (3) weisen unterschiedliche flächige Ausdehnungen auf, d.h. sie sind nicht gleich groß.

In **Figur 2** ist eine MEE mit semi-coextensivem Design gezeigt. Im wesentlichen ist der Aufbau vergleichbar mit **Figur 1****,** jedoch weisen die Katalysatorschichten (2) und (3) die gleiche flächige Ausdehnungen auf. Die Fläche des ersten Gasverteilersubstrates (4) ist kleiner als die der Membran (1), so daß die Membran (1) auf der Vorderseite wieder eine nicht von Gasverteilersubstrat (4) gestützte Oberfläche (6) besitzt. Die Katalysatorschichten (2) und (3) besitzen in dieser Ausführungsform eine kleinere Fläche als die ionenleitende Membran. In einer alternativen Ausführungsform können jedoch die Katalysatorschichten (2) und (3) die gleiche flächige Ausdehnung wie die ionenleitende Membran (1) aufweisen.

**Figur 3** zeigt ebenfalls als Schnittbild die Abdichtung einer Membran-Elektroden-Einheit mit geeignetem Dichtungsmaterial (7). Dabei ist der Rand der Gasverteilersubstrate (4, 5) und die nicht von einem Gasverteilersubstrat gestützte Oberfläche (6) der ionenleitfähigen Membran (1) mit einem Dichtungsmaterial (7) umfasst. Das Dichtungsmaterial (7) kann durch eingearbeitete pulverförmige oder faserförmige Materialien mechanisch verstärkt sein.

Erfindungsgemäß imprägniert wie in **Figur 4** gezeigt, das Dichtungsmaterial den Randbereich der Gasverteilersubstrate (4, 5) bis zu einer Breite von mindestens 0,5 mm, vorzugsweise 3 bis 10 mm. Diese zusätzlich imprägnierten Stellen der Gasverteilersubstrate (4, 5) sind in dieser Figur mit (7a) gekennzeichnet.

**Figur 5** zeigt eine weitere Ausführungsform einer erfindungsgemäßen MEE, wobei diese einen mehrlagigen bzw. mehrschichtigen Rahmen aus Dichtungsmaterial besitzt. Der Rahmen besteht vorzugsweise aus zwei Lagen von kriechfestem Dichtungsmaterial (8), die jeweils auf der Vorder- sowie auf der Rückseite der MEE angebracht sind. Diese Lagen aus kriechfestem Dichtungsmaterial (8) sind mittels einer Schicht aus weiterem Dichtungsmaterial (7) sowohl miteinander, als auch gleichzeitig mit der gesamten MEE verbunden. Die Dicke des gesamten Rahmens ist so ausgelegt, dass die Gasverteilersubstrate (4, 5) der MEE in einer zusammengebauten PEM-Zelle optimal komprimiert werden. Weitere Lagen bzw. Schichten an Dichtungsmaterial sind möglich.

Ein wesentliches Merkmal der erfindungsgemäßen Membran-Elektroden-Einheit mit semi-coextensivem Design ist das Vorhandensein einer freien, nicht von einem Gasverteilersubstrat gestützten bzw. abgedeckten Membranoberfläche (6). Es hat sich überraschenderweise gezeigt, dass gerade durch diesen Umstand eine wesentlich bessere Gasdichtigkeit bei der Abdichtung bzw. Versiegelung des Randbereiches der Membran-Elektroden-Einheit erzielt wird. Dies ist vor allem deshalb von großer Bedeutung, weil bei erhöhtem Durchtritt von Wasserstoff auf die Sauerstoffseite der Brennstoffzelle sogenannte "hot spots" auftreten können, an denen der Wasserstoff katalytisch verbrannt wird. Dies kann schon nach kurzer Einsatzdauer zum Ausfall der Zelle führen. Solche Effekte können aber vor allem bei längerem Betrieb der MEE im PEM-Brennstoffzellenstack auftreten und die die Stack-Lebensdauer erheblich verkürzen. Anzeichen für einen erhöhten Wasserstoff-Durchtritt auf die Sauerstoffseite der Brennstoffzelle ist die Herabsetzung der offenen Zellspannung ohne Strom (engl. "open cell voltage", "OCV") auf einen Wert unter 920 mV. Der Wasserstoffdurchtritt kann weiterhin als Durchtrittsstrom mit Hilfe der zyklischen Voltammetrie gemessen werden. Werte für die Durchtrittsstromdichte von größer als 1,5 mA/cm² zeigen Leckagen an. Die geschilderten Messmethoden werden in der vorliegenden Anmeldung verwendet um die verbesserten Eigenschaften der Membran-Elektroden-Einheit mit semi-coextensivem Design zu dokumentieren.

Ein weiterer Vorteil der erfindungsgemäßen MEE ist, daß sie aufgrund des beschriebenen Aufbaus eine stabile, gut handhabbare Struktur besitzt. Die beiden Pole bzw. Elektroden der Membran-Elektroden-Einheit sind im Randbereich aufgrund des erfindungsgemäßen Aufbaues räumlich weiter voneinander getrennt. Die Kurzschlußgefahr ist deutlich reduziert Beim Schneiden bzw. Vereinzeln der MEEs und bei anderen nachfolgenden Verarbeitungsschritten besteht nicht die Gefahr, daß die Pole z.B. durch Fasern aus den Gasverteilersubstraten kurzgeschlossen werden.

Die Membran-Elektroden-Einheiten können mit allen gängigen Verfahren hergestellt werden, die dem Fachmann auf diesem Gebiet bekannt sind.

Ein Weg führt beispielsweise über das Zusammenfügen bzw. Laminieren zweier katalysatorbeschichteter Gasverteilersubstrate auf der Vorder- und Rückseite der ionenleitenden Membran. Die betreffenden Gasverteilersubstrate mit unterschiedlichen flächigen Ausdehnungen werden mit katalysatorhaitigen Tinten beschichtet und getrocknet. Die so erzeugten Katalysatorschichten enthalten, je nach Zusammensetzung der Tinten, edelmetallhaltige Katalysatoren und gegebenenfalls ionenleitende Materialien und weitere Hilfsstoffe wie Porenbildner oder PTFE. Geeignete Tinten sind in der EP 1 176 452 beschrieben. Sodann verpresst man diese mit einer Membran unter Anwendung von Hitze und Druck, wobei die flächige Ausdehnung der Membran jener des größeren Gasverteilersubstrates entspricht. Die Gasverteilersubstrate (GDLs) können aus porösen, elektrisch leitfähigen Materialien wie Kohlefaserpapier, Kohlefaservlies, Kohlefasergewebe, Metallnetze, metallisierte Fasergewebe und ähnlichem bestehen ("Verfahren über katalysatorbeschichtete Gasverteilersubstrate").

Alternativ können auch katalysatorbeschichtete Membranen ("catalyst-coated-membranes", "CCMs") eingesetzt werden. Auf den direkt auf die Membran aufgebrachten Katalysatorschichten bringt man dann in einem weiteren Verbindungsschritt die Gasverteilersubstrate auf, die in der Regel nicht mit Katalysator beschichtet sind. Wichtig ist auch hierbei, dass eines der beiden Gasverteilersubstrate im wesentlichen deckungsgleich mit der Membran ist und das zweite Gasverteilersubstrat kleiner als die Membran ist (sog. "Verfahren über katalysatorbeschichtete Membranen").

Selbstverständlich sind auch Mischformen und Kombinationen dieser beiden Verfahren zur Herstellung der MEEs möglich.

Die ionenleitende Membran besteht in der Regel aus protonenleitenden Polymermaterialien. Bevorzugt wird ein Tetrafluorethylen-Fluor-vinylether-Copolymer mit Sulfonsäuregruppen verwendet. Dieses Material wird zum Beispiel unter dem Handelsnamen Nafion^{®} von DuPont vertrieben. Es sind jedoch auch andere, insbesondere fluorfreie Ionomermaterialien, wie dotierte sulfonierte Polyetherketone oder dotierte sulfonierte oder sulfinierte Arylketone sowie dotierte Polybenzimidazole einsetzbar.

Zur Abdichtung bzw. Versiegelung der Membran-Elektroden-Ein-heiten können organische Polymere eingesetzt werden, die unter den Arbeitsbedingungen der Brennstoffzelle inert sind und keine störenden Substanzen absondern. Die Polymere müssen in der Lage sein, die Gasverteilersubstrate gasdicht zu umschließen. Weitere wichtige Anforderungen an solche Polymere sind ein gutes Adhäsionsvemögen sowie gute Benetzungseigenschaften zur freien Oberfläche der ionenleitenden Membran.

Geeignete Materialien sind zum einen thermoplastische Polymere wie beispielsweise Polyethylen, Polypropylen, PTFE, PVDF, Polyamid, Polyimid, Polyurethan oder Polyester; zum anderen auch duroplastische Polymere wie beispielsweise Epoxidharze oder Cyanacrylate. Weiterhin geeignet sind Elastomere, wie beispielsweise Silikonkautschuk, EPDM, Fluor-Elastomere, Perfluor-Elastomere, Chloropren-Elastomere, Fluorsilikon-Elastomere.

Zur Applikation des polymeren Dichtungsmaterials kann das Polymer in sowohl Form eines vorgeschnittenen Folienrahmens als auch als Flüssigkeit bzw. Formmasse eingesetzt werden.

Eine weitere wichtige Eigenschaft des polymeren Dichtungsmaterials ist die Festigkeit, insbesondere die Kriechfestigkeit unter mechanischer Last. Die Membran-Elektroden-Einheiten werden im Brennstoffzellenstapel mechanisch verspannt. Dabei ist es wichtig, eine definierte Kompression der MEEs einzustellen. Dies erfolgt gewöhnlich durch Einstellung einer definierten Anpresskraft, die so eingestellt wird, daß die MEE auf eine bestimmte, für die optimale Leistung der Zelle charakteristische Dicke komprimiert wird. Dabei wird ein Optimum zwischen der Reduktion des elektrischen Kontaktwiderstands und der für den Reaktivgasantransport benötigten Dicke und Porosität der Gasverteilerstrukturen der MEE eingestellt.

Bei nicht ausreichender Kriechfestigkeit wird der Randbereich der MEE bestehend aus polymerem Rahmen und gegebenenfalls auch inaktiver Polymerlektrolytmembran irreversibel deformiert. Dabei wird der Spalt zwischen den Zellplatten und damit auch der Raum für die MEE kleiner und die Komprimierung der MEE mit fortschreitender Betriebsdauer erhöht. Dies gilt insbesondere für Polymere mit einem niedrigem Glaspunkt (Tg) der im Arbeitsbereich der PEM-Brennstoffzelle von 50 bis 100 °C liegt. Die fortschreitende Komprimierung der MEE über den Idealpunkt hinaus, führt zur Abnahme der Leistung und darüber hinaus später zum Ausfall der Zelle wegen Membranperforation durch die Kohlefasern der Gasverteilerstrukturen.

In einer weiteren erfindungsgemäßen Ausführungsform (dem sogenannten "mehrlagigen" Aufbau, vgl. **Figur 5**) werden Polymere mit hohem Glasübergangspunkt (Tg), hohem Schmelzpunkt und hoher Wärmeformbeständigkeit zum Aufbau des polymeren Rahmens verwendet. Aufgrund der hohen Glasübergangspunkte bzw. Schmelzpunkte ist die Verarbeitung der Polymeren in einem Temperaturfenster, das für PEMBrennstoffzellen-Komponenten, wie z.B. Ionomermernbranen üblich ist, nicht möglich.

Deshalb werden die Rahmenmaterialien mit einem polymeren Klebematerial miteinander und mit der Struktur der MEE verbunden. Das Klebematerial wird dabei als Zwischenlage zwischen zwei Rahmenmaterialien eingebracht und bindet auf der Stufe der freiliegenden Membran an. Außerdem fließt es bei der Applikation des Rahmens unter Hitze und Druck in die Strukturen der Gasverteilersubstrate und Katalysatorschichten ein und verbindet dabei den polymeren Rahmen und die MEE miteinander. Die Dicke der Klebematerial-Schicht sollte 10 bis 60 µm, bevorzugt 30 µm betragen.

Als besonderes kriechfeste Materialien kommen Polymere mit hohem Glaspunkt (Tg) (über 100 °C, vorzugsweise über 120 °C) und mit hoher Wärmestandfestigkeit im Arbeitstemperaturbereich der PEM-Brennstoffzelle zum Einsatz. Beispiele für solöche Materialien sind hochschmelzende Polyester, Polyphenylensulfide oder Polyamide usw.

Als Klebematerialien können Kaltklebstoffe und Heißklebestoffe wie Acrylate, Cyanacrylate, Epoxidharze, EVA, Polyethylen und Polypropylen usw. eingesetzt werden.

Zur Erleichterung der Fertigung von erfindungsgemäßen Rahmen sollten die Klebeschichten vorab auf die Rahmen aufgebracht werden. Die beiden vorgefertigten Rahmen mit Klebeschicht können dann miteinander verklebt werden. Anschließend wird die Membran-Elektroden-Einheit in die Rahmenöffnung eingelegt und das Paket unter Hitze und Druck verbunden.

Beim Einsatz von vorgeschnittenen Folien zum Abdichten der erfindungsgemäßen Membran-Elektroden-Einheit kann diese zwischen zwei entsprechend vorgeschnittenen Rahmen aus thermoplastischem Material in eine Presse eingelegt werden. Die Rahmen werden so geschnitten, daß sie mit ihrem inneren Ausschnitt die Gestalt der jeweiligen aktiven Fläche möglichst genau umfassen. Das polymere Folienmaterial wird dann unter Anwendung von Hitze und Druck aufgeschmolzen. Es umfaßt danach den äußeren Bereich der semi-coextensiven Gasverteilerstrukturen sowie die freie Oberfläche der Membran stoffschlüssig.

In einer weiteren Ausfühmngsform werden zur Erhöhung der Kriechfestigkeit des Rahmens Füllstoffe in das polymere Rahmenmaterial eingearbeitet. Als Füllstoffe kommen chemisch inerte und elektrisch isolierende anorganische Materialien wie z.B. Glasfasern oder Glaskugeln in Frage. Die Materialien werden vor Herstellung der Dichtungsrahmen in das polymere Rahmenmaterial eingebracht ("compoundiert"). Typische Gehalte an Verstärkungsmaterialien liegen zwischen 10 und 30 Gew.-%. Die füllstoffverstärkten Polymere werden nach den üblichen Folienherstellungsverfahren zu Folien verarbeitet und zu Rahmen zugeschnitten. Die Rahmen können mittels Hitze und Druck mit den erfindungsgemäßen MEE-Gebilden verbunden werden.

Beim Einsatz von polymeren Dichtungsmaterialien in flüssiger Form oder als Formmasse wird das Polymer zunächst mit den üblichen Applikationstechniken, wie Rakeln, Sprühen, Tauchen, Spritzgießen und verschiedenen Drucktechniken auf den Randbereich der Membran-Elektroden-Einheit aufgebracht. Anschließend erfolgen Formgebung und Aushärtung des Polymers. Dabei können auch besondere Strukturen ausgeformt werden, gemäß dem Design der Zellplatten des Brennstoffzellenstapels. Die Aushärtung des polymeren Dichtungsmaterials kann je nach Art und Natur des Polymers durch Kontakt mit Luftfeuchtigkeit und/oder bei erhöhter Temperatur stattfinden.

Die Gasverteilersubstrate der erfindungsgemäßen MEE sind in ihrem peripheren Bereich mit Polymermaterial gasdicht imprägniert. Dazu können Rahmen aus thermoplastischem Polymer so zugeschnitten werden, daß ihr innerer Ausschnitt etwas kleiner als die Fläche des kleineren Gasverteilersubstrates der Membran-Elektroden-Einheit ist. Das Polymermaterial wird dann unter Anwendung von Hitze und Druck aufgeschmolzen. Es imprägniert danach den peripheren Bereich der beiden semicoextensiven Gasverteilersubstrate durchgehend bis zur Membran und umfaßt die freiliegende Oberfläche der Membran und die Gasverteilersubstrate stoffschlüssig.

Das gleiche Ergebnis kann durch den Einsatz von polymeren Dichtungsmaterialien in flüssiger Form erzielt werden. Die Eindringbreite und Eindringtiefe des Dichtungsmaterials in den Randbereich der MEE kann dabei durch dessen Viskosität und Benetzungseigenschaften gesteuert werden. Die Aushärtung des polymeren Dichtungsmaterials kann je nach Polymertyp durch Kontakt mit Luftfeuchtigkeit und/oder bei erhöhter Temperatur stattfinden.

Ein Verfahren zur Herstellung einer festen Verbindung der erfindungsgemäßen Membran-Elektroden-Einheit mit einem Rahmen aus polymerem Dichtungsmaterial ist ebenfalls Gegenstand der vorliegenden Erfindung. Das Verfahren ist dadurch gekennzeichnet, daß die MEE mit einem oder mehreren vorgefertigten Rahmen aus polymerem Dichtungsmaterial in Kontakt gebracht wird und die in direktem Kontakt stehenden Bereiche von MEE und polymerem Dichtrahmen unter Druck mit einem kurzzeitigen elektrischen Heizpuls verschweißt werden. Das Verfahren wird auch als "Wärmeimpulsschweissen" bezeichnet.

Der Vorteil des Wärmeimpulsschweissens gegenüber herkömmlichen Pressen und Laminieren ist die schnelle Zykluszeit. Die Werkzeugkosten liegen wiederum deutlich niedriger als beim Spritzguß, damit kann beim Wärmeimpulsschweißen flexibler auf veränderte Geometrien reagiert werden. Beim Wärmeimpulsschweißen erfolgt die Erwärmung der Schweißzone durch das Material hindurch mit elektrisch beheizten Heizleisten; dadurch wird innerhalb kurzer Zeit eine hohe Temperatur im zu verschweißenden Material erreicht. Aufgrund der geringen Masse und damit Wärmespeicherkapazität der Heizbänder kühlt das Gesamtsystem nach Abschalten des Stroms in kürzester Zeit unter die Erstarrungstemperatur der Folie ab und das geschweißte Gut kann entnommen werden. Dadurch liegen die Schweiß- und Kühlzeiten um mehr als eine Größenordnung unter den Prozeßzeiten beim Einsatz von Heißpressen.

Die Dauer der Heizphasen liegen im Bereich weniger Sekunden und die Abkühlung der Probe erfolgt unter Druck. Der Aufbau eines Schweißwerkzeugs mit den elektrisch beheizbaren Bahnen wird so gestaltet, daß diese so angeordnet sind, daß nur die direkten Kontaktzonen von MEE-Struktur und polymerem Rahmenmaterial und bei Bedarf das polymere Rahmenmaterial selbst thermisch belastet werden. Übliche Verfahrensparameter sind Temperaturen im Bereich von 100 bis 220 °C, Drücke im Bereich von 1 bis 10 bar sowie Aufheizzeiten von 1 bis 20 Sekunden. Die Abkühlzeiten liegen bei 20 bis 60 Sekunden.

Eine weitere Möglichkeit der Ausführung besteht in der Anbindung eines vorgeschnittenen Außenrahmens an die erfindungsgemäße MEE durch ein flüssiges polymeres Dichtungsmaterial. Es ist dabei auch möglich, sogenannte wärme-reaktivierbare Dichtungsmaterialien einzusetzen, die nach einem ersten Aushärtungsschritt bei einer weiteren Temperaturerhöhung Klebewirkung zeigen und dann endgültig aushärten. Bei diesem Schritt kann der vorgefertigte Aussenrand gleichzeitig angeklebt werden. Die so end-konfektionierte Membran-Elektroden-Einheiten stellen einen einteiligen, gut mechanisch handhabbaren Verbund dar, die in einem einfachen Verfahren in einen Brennstoffzellenstapel eingebaut werden können.

Die nachfolgenden Beispiele 1, 3 und 4 sollen die Erfindung verdeutlichen.

### Beispiel 1:

### Herstellung einer erfindungsgemäßen Membran-Elektroden-Einheit mit semi-coextensivem Design (einlagiger Rand)

Zunächst werden zwei katalysatorbeschichtete Gasverteilersubstrate mit einer Platinbeladung von jeweils 0,25 mg Pt/cm² hergestellt. Dabei kommen Kohlefaservliese vom Typ SIGRACET 30BC (hydrophobiert, mit Ausgleichsschicht; Fa. SGL, Meitingen) zur Verwendung. Durch speziellen Zuschnitt werden
a) Gasverteilersubstrat A mit einem Format von 73 x 73 mm und
b) Gasverteilersubstrat B mit einem Format von 75 x 75 mm und
c) Membran Nafion® 112 (Fa. DuPont Fluoroproducts, Fayetteville USA) mit einem Format von 75 x 75 mm
bereitgestellt. Die Gasverteilersubstrate A und B werden mit den katalysatorbeschichteten Seiten der Membran zugewandt und auf der Membran positioniert. Dabei zentriert man das kleinere Gasverteilersubstrat A mittig auf der Membran. Anschließend wird das Gebilde bei 150°C und einem Druck von 150 N/cm² verpreßt. Die fertige Membran-Elektroden-Einheit weist ein semi-coextensives Design mit einen Rand aus freiliegender Membran von 1 mm auf.

Zur Versiegelung/Abdichtung der so hergestellten MEE werden aus einer Polyamid- Folie (Typ Vestamelt 3261, Fa. Epurex, Walsrode) mit einer Dicke von 0,21 mm Rahmen von
a) 100 x 100 mm Außenmaß und 71 x 71 mm Innenausschnittsmaß und
b) 100 x 200 mm Außenmaß und 75 x 75 mm Innenausschnittsmaß geschnitten.

Die Membran-Elektroden-Einheit wird mit Gasverteilersubstrat B nach unten auf einem Rahmen (Dicke 0,210 mm) mit Innenausschnittsmaß 71 x 71 mm mittig zentriert positioniert. Außen um die Membran-Elektroden-Einheit anliegend wird ein weiterer Rahmen (Gesamtstärke 0,210 mm) mit Innenausschnittsmaß 75 x 75 mm positioniert. Auf die Oberfläche des kleineren Gasverteilersubstrates A wird ebenfalls ein Rahmen (Dicke 0,210 mm) mit Innenausschnittsmaß 71 x 71 mm mittig zentriert aufgebracht.

Das gesamte Gebilde wird zwischen zwei Trennfolien gepackt und in einer Heißpresse mit einer Plattentemperatur von 165 °C zunächst 90 Sekunden lang drucklos erwärmt. Danach wird die Kraft der Presse auf 10 t erhöht und das Gebilde mit dieser Kraft 30 Sekunden lang verpreßt. Anschließend wird auf Zimmertemperatur abgekühlt. Die fertige Membran-Elektroden-Einheit mit semi-coextensivem Design weist einen glatten, transparenten Kunststoffrand auf, der eine sehr gute Haftung zur MEE besitzt.

### Vergleichsbeispiel 1 (VB 1)

Die Herstellung einer Membran-Elektroden-Einheit mit coextensivem Design erfolgt im Prinzip wie in Beispiel 1 beschrieben. Die beiden eingesetzten Gasverteilersubstrate (A, B) sowie die Membran haben jedoch die gleichen flächigen Ausdehnungen von 73 x 73 mm. Die MEE weist keinen umlaufenden Rand an freier Membran auf.

Die Versiegelung/Abdichtung der MEE wird, wie in Beispiel 1 ausgeführt, unter Verwendung der gleichen Polyamid-Folie und mit den gleichen Verfahrensparametern durchgeführt. Die MEE Weist einen glatten, transparenten Kunststoffrand auf, der eine im Vergleich zu Beispiel 1 geringere Haftung zur MEE besitzt.

### Beispiel 2 (nicht Teil der Erfindung)

### Herstellung einer Membran-Elektroden-Einheit mit semi-coextensivem Design (mehrlagiger Rand)

Eine erfindungsgemäße Membran-Elektroden-Einheit mit semi-coextensivem Design wird wie in Beispiel 1 beschrieben bereitgestellt. Die Maße der semicoextensiven MEE sind 71 mm x 71 mm (kleinere Elektrode) und 75 mm x 75 mm (größere Elektrode) und Membran. Die Dicke der MEE beträgt 650 bis 700 µm.

Ebenfalls bereitgestellt werden:
a) ein Rahmen aus Hostaphan RN (Fa. Mitsubishi Films, Dicke 250 µm, PET, Erweichungspunkt: > 250°C) mit einem Außenmaß von 110 mm x 110 mm und einem Innenausschnittsmaß von 71,5 mm x 71,5 mm und
b) ein Rahmen aus Hostaphan RN (Fa. Mitsubishi Films, 250 µm dick, PET, Erweichungspunkt: > 250°C) mit einem Außenmaß von 110 mm x 110 mm und einem Innenausschnittsmaß von 75,5 mm x 75,5 mm sowie
c) ein Rahmen aus Macromelt Q 5375-22 (Fa. Henkel, polyolefinischer Heissschmelzkleber Erweichungspunkt: ca. 140 °C, Dicke 60 µm ; auf Silikonpapierträger) mit einem Außenmaß von 110 mm x 110 mm und einem Innenausschnittsmaß von 71,5 mm x 71,5mm.

Der Rahmen aus Macromelt wird mit der Kleberseite deckungsgleich auf den größeren der beiden Hostaphan-Rahmen aufgebracht. Das Silikonpapier wird abgezogen, so daß der Kleber auf dem Hostaphan haftet. Der zweite Hostaphan-Rahmen wird anschließend mit der Klebeschicht in Verbindung gebracht. Der so entstandene 3-lagige Rahmen besteht dann aus zwei Hostaphan-Schichten, die durch eine Macromelt-Schicht verbunden sind. Die 3-lagige Rahmenstruktur wird danach zur Verbesserung der Haftung in einer Heißpresse bei 130°C und 100 N/cm² 30 Sekunden lang verpreßt. Die Gesamtdicke beträgt danach 530 µm. Die bereitgestellte semicoextensive MEE wird so in die Öffnung des Rahmens eingelegt, daß der kleinere Rahmenausschnitt um die kleinere Elektrode und der größere Rahmenausschnitt um die größere Elektrode herum anliegt.

Das so geformte Paket wird anschließend in einer Heißpresse bei T = 150 °C und p = 200 N/cm² 15 Sekunden lang verpreßt. Anschließend wird auf Zimmertemperatur abgekühlt.

Die fertige Membran-Elektroden-Einheit mit semi-coextensivem Design weist einen glatten, transparenten mehrlagigen Kunststoffrand auf, der eine sehr gute Haftung zur MEE besitzt. Die elektrochemischen Werte sind in **Tabelle 1** zusammengefasst.

### Beispiel 3

### Herstellung einer erfindungsgemäßen Membran-Elektroden-Einheit mit semi-coextensivem Design unter Anwendung des Wärmeimpulsschweissens

Zunächst wird eine semicoextensive MEA entsprechend Beispiel 1 bereitgestellt.

Zur Abdichtung der so hergestellten MEE werden aus einer Polyamid-Folie (Typ Vestamelt 3261, Fa. Epurex, Walsrode) mit einer Dicke von 0,30 mm Rahmen von
100 x 100 mm Außenmaß und 73,5 x 73,5 mm Innenausschnittsmaß und
100 x 100 mm Außenmaß und 75,5 x 75,5 mm Innenausschnittsmaß geschnitten.

In einer pneumatischen Schweisspresse wurde ein Impulsschweisswerkzeuges in Rechteckform (102 mm x 102 mm, 15,5 mm Nahtbreite, Fa. Schirrmacher, Trittau) angebracht. Zum Betrieb wurde ein Impulsgenerator zum Betrieb von Impuls-Schweissmaschinen verwendet. Die 15,5 mm breiten Heizbahnen sind so angebracht, daß sie parallel in einem Abstand der Außenkanten von 100 mm verlaufen.

Die bereitgestellte semicoextensive MEA wird so in die Öffnung der beiden Rahmen eingelegt, daß der kleinere Rahmenausschnitt um die kleinere Elektrode und der größere Rahmenausschnitt um die größere Elektrode herum anliegt. Das so bereitgestellte Paket wird so in die Schweisspresse eingelegt, daß die Schweissbahnen die zwei parallelen Rahmenbereiche vollständig bedecken.

Die Verschweissung erfolgt dann bei einer Temperatur von 165 °C und einem Druck von 3,5 bar und einer Heizzeit von 5 Sekunden. Die Presse bleibt nach dem Heizpuls 60 Sekunden lang geschlossen, um ein vollständiges Abkühlen der Probe zu gewährleisten Danach wird die Probe aus der Schweißpresse herausgenommen und quer zur bereits verschweißten Bahn eingelegt. Die Verschweißung in Querrichtung erfolgt dann wie oben beschrieben.

Die fertige Membran-Elektroden-Einheit mit semi-coextensivem Design weist einen transparenten Kunststoffrand auf, der eine sehr gute Haftung zur MEE besitzt.

### Beispiel 4

### Herstellung einer erfindungsgemäßen Meinbran-Elektroden-Einheit mit semi-coextensivem Design (Verwendung von Dichtungsmaterialien mit Füllstofen)

Bereitgestellt werden Granulat Vestamelt 3261 (Degussa, Düsseldorf) und Glaskugelmaterial Typ 5000 cpo 3 (Fa. Potters-Ballottini, Suffolk England; Durchmesser 60 bis 80 µm). Eine Mischung von 20 Gew.-% Glaskugelmaterial und 80 Gew.-% Vestamelt 3261 werden im Kneter (Laborkneter; Knetkammer 30g/50g; Hersteller: Brabender, Typ: PL 2000/3) bei 180 °C innig vermischt. Das so gewonnene Compound wird dann bei 180 C zu Folien von 300 µm Dicke verpresst. Die gefertigten Folien werden zu Rahmen zugeschnitten.

Die Weitervearbeitung zu einer MEE mit polymerem Dichtungsrahmen erfolgt danach wie in Beispiel 3 beschrieben. Die fertige Membran-Elektroden-Einheit mit semi-coextensivem Design weist einen mechanisch sehr kriechfesten, stabilen Kunststoffrand auf, der eine sehr gute Haftung zur MEE besitzt.

### Elektrochemische Prüfungen

Die fertig abgedichteten Membran-Elektroden-Einheiten aus Beispiel 1, Beispiel 2 und Vergleichsbeispiel 1 (VB 1) werden in einer PEM-Testzelle mit einer aktiven Zellfläche von 50 cm² im Wasserstoff/Luft-Betrieb getestet. Zunächst wird die offene Zellspannung ohne Strombelastung gemessen ("OCV"). Danach bestimmt man die Menge des Wasserstoffs, der von der Anodenseite auf die Kathodenseite durchtritt ("Wasserstoff-Durchtrittsstrom") mittels der zyclischen Voltammetrie (CV). **Tabelle 1** zeigt die gemessenen Werte im Vergleich. Es wird deutlich, daß die erfindungsgemäße Membran-Elektroden-Einheiten eine verbesserte Abdichtung der Gasräume gegeneinander im Vergleich zur MEE mit coextensivem Design (Vergleichsbeispiel VB1) aufweist.

### Tabelle 1:

Vergleich der offenen Zellspannung (open cell voltage, OCV) und des Wasserstoff-Durchtrittsstroms von Membran-Elektroden-Einheiten mit coextensivem und semi-coextensivem Design.

| | Design | Offene Zellspannung [OCV, mV] | Wasserstoff Durchtritts-Strom [mA/cm²] |
|---|---|---|---|
| Vergleichsbeispiel (VB1) | coextensiv | 890 | > 4 |
| Beispiel 1 | semi-coextensiv 1-lagig | 950 | 0,89 |
| Beispiel 2 | semi-coextensiv 2-lagig | 963 | n.b. |

## Patentansprüche

1. Membran-Elektroden-Einheit für elektrochemische Vorrichtungen, aufweisend eine ionenleitende Membran mit Vorder- und Rückseite (1), eine erste Katalysatorschicht (2) und ein erstes Gasverteilersubstrat (4) auf der Vorderseite sowie eine zweite Katalysatorschicht (3) und ein zweites Gasverteilersubstrat (5) auf der Rückseite, wobei das erste Gasverteilersubstrat (4) eine geringere flächige Ausdehnung als die ionenleitende Membran (1) und das zweite Gasverteilersubstrat (5) im wesentlichen die gleiche flächige Ausdehnung wie die ionenleitende Membran (1) aufweist, wobei der Rand der Gasverteilersubstrate (4, 5) und die nicht von einem Gasverteilersubstrat gestützte freie Oberfläche (6) der ionenleitenden Membran (1) mit einem polymeren Dichtungsmaterial (7) umfasst sind, wobei zusätzlich das Dichtungsmaterial den Randbereich (7a) der Gasverteilersubstrate (4, 5) bis zu einer Breite von mindestens 0,5 mm imprägniert.

2. Membran-Elektroden-Einheit nach Anspruch 1, wobei die Katalysatorschicht auf der Vorderseite (2) und die Katalysatorschicht auf der Rückseite (3) der ionenleitenden Membran (1) unterschiedliche flächige Ausdehnungen aufweisen.

3. Membran-Elektroden-Einheit nach Anspruch 1 oder 2, wobei die Katalysatorschicht auf der Vorderseite (2) und die Katalysatorschicht auf der Rückseite (3) der ionenleitenden Membran (1) die gleiche flächige Ausdehnung aufweisen.

4. Membran-Elektroden-Einheit nach einem der Ansprüche 1 bis 3, wobei die ionenleitende Membran (1) auf der Vorderseite eine nicht von einem Gasverteilersubstrat gestützte Oberfläche (6) aufweist.

5. Membran-Elektroden-Einheit nach einem der Ansprüche 1 bis 4, wobei die Katalysatorschichten auf der Vorderseite (2) und auf der Rückseite (3) edelmetallhaltige Katalysatoren und gegebenenfalls ionenleitende Materialien aufweisen.

6. Membran-Elektroden-Einheit nach einem der Ansprüche 1 bis 5, wobei die ionenleitende Membran organische Polymere, wie beispielsweise protonenleitende perfluorierte polymere Sulfonsäureverbindungen, dotierte Polybenzimidazole, Polyetherketone, Polysulfone oder ionenleitende keramische Materialien aufweist und eine Dicke von 10 bis 200 µm aufweist.

7. Membran-Elektroden-Einheit nach einem der Ansprüche 1 bis 6, wobei die Gasverteilersubstrate porösen, elektrisch leitfähige Materialien wie Kohlefaserpapier, Kohlefaservlies, Kohlefasergewebe, Metallnetze, metallisierte Fasergewebe etc. aufweisen.

8. Membran-Elektroden-Einheit nach einem der Ansprüche 1 bis 7, wobei das Dichtungsmaterial thermoplastische Polymere aus der Gruppe der Polyethylene, Polypropylene, Polytetrafluorethylene, PVDF, Polyester, Polyamide, Polyamidelastomere, Polyimide und Polyurethane, Elastomere aus der Gruppe der Silicone, Silikonelastomere, EPDM, Fluor-Elastomere, Perfluoro-Elastomere, Chloropren-Elastomere, Fluorsilikon-Elastomere und/oder duroplastische Polymere aus der Gruppe der Epoxidharze, Phenolharze und Cyanacrylate aufweist.

9. Membran-Elektroden-Einheit nach einem der Ansprüche 1 bis 7, wobei das Dichtungsmaterial durch chemisch inerte, elektrisch isolierende anorganische Materialien verstärkt ist.

10. Membran-Elektroden-Einheit nach einem der Ansprüche 1 bis 7, wobei das Dichtungsmaterial mit einem weiteren die Membran (1) umlaufenden Kunststoff-Rahmen stoffschlüssig verbunden ist.

11. Membran-Elektroden-Einheit nach eneim der Ansprüche 1 bis 7, wobei das Dichtungsmaterial mehrere Lagen aus kriechfestem Polymermaterial aufweist, die mittels einer Schicht aus Klebematerial sowohl miteinander als auch gleichzeitig mit der Membran-Elektroden-Einheit verbunden sind.

12. Membran-Elektroden-Einheit nach Anspruch 11, wobei als kriechfest Materialien Polymere mit einem Glaspunkt (Tg) über 100 °C zum Einsatz kommen.

13. Membran-Elektroden-Einheit nach Anspruch 11, wobei als Klebematerial Kaltklebstoffe oder Heissklebstoffe aus der Gruppe der Acrylate, Cyanacrylate, Epoxidharze, EVA, Polyethylen, Propylen usw. eingesetzt werden können.

14. Verfahren zur Herstellung der Membran-Elektroden-Einheit nach einem der Ansprüche 1 bis 13,
umfassend die Schritte:
a) Beschichtung des ersten und zweiten Gasverteilersubstrats (4, 5) mit katalysatorhaltiger Tinte zur Erzeugung der Katalysatorschichten (2, 3) jeweils auf den Gasverteilersubstraten (4, 5),
b) Aufbringen der katalysatorbeschichteten Gasverteilersubstrate (2, 4 und 3, 5) auf die Vorder- bzw. die Rückseite der ionenleitenden Membran (1) und Zusammenfügen zur Bildung einer Membran-Elektroden-Einheit,
c) Versiegelung der Membran-Elektroden-Einheit mit polymerem Dichtungsmaterial (7), so dass der Rand der Gasverteilersubstrate (4, 5) und die nicht von einem Gasverteilersubstrat gestützte Oberfläche (6) der ionenleitfähigen Membran (1) mit dem Dichtungsmaterial (7) umfasst sind und das Dichtungsmaterial den Randbereich (7a) der Gasverteilersubstrate (4, 5) bis zu einer Breite von mindestens 0.5 mm imprägniert.

15. Verfahren zur Herstellung der Membran-Elektroden-Einheit nach einem der Ansprüche 1 bis 13,
umfassend die Schritte
a) Beschichtung der ionenleitfähigen Membran (1) auf der Vorder- und Rückseite mit katalysatorhaltiger Tinte zur Erzeugung der Katalysatorschichten (2, 3) auf der ionenleitfähigen Membran (1),
b) Aufbringen von zwei nicht katalysatorbeschichteten Gasverteilersubstraten (4, 5) auf die Vorder- bzw. Rückseite der mit den Katalysatorschichten (2, 3) beschichteten ionenleitenden Membran (1) und Zusammenfügen zur Bildung einer Membran-ElektrodenEinheit,
c) Versiegelung der Membran-Elektrodeneinheit mit polymerem Dichtungsmaterial (7), so dass der Rand der Gasverteilersubstrate (4, 5) und die nicht von einem Gasverteilersubstrat gestützte Oberfläche (6) der ionenleitfahigen Membran (1) mit dem Dichtungsmaterial (7) umfasst sind, und das Dichtungsmaterial den Randbereich (7a) der Gasverteilersubstrate (4, 5) bis zu einer Breite von mindestens 0.5 mm imprägniert.

16. Verwendung der Membran-Elektroden-Einheiten nach einem der Ansprüche 1 bis 13 zur Herstellung von Zellenstapeln für elektrochemische Vorrichtungen, insbesondere für Brennstoffzellen.

## Claims

1. A membrane-electrode assembly for electrochemical devices, comprising an ion-conducting membrane having a front side and a rear side (1), a first catalyst layer (2) and a first gas diffusion substrate (4) on the front side as well as a second catalyst layer (3) and a second gas diffusion substrate (5) on the rear side, wherein the first gas diffusion layer (4) has smaller planar dimensions than the ion-conducting membrane (1) and the second gas diffusion substrate (5) has essentially the same planar dimensions as the ion-conducting membrane (1), wherein the edges of the gas diffusion substrates (4, 5) and the free surface (6) of the ion-conducting membrane (1) which is not supported by a gas diffusion substrate are enclosed by a polymeric sealing material (7), wherein the sealing material additionally impregnates the edge regions (7a) of the gas diffusion substrates (4, 5) to a width of at least 0.5 mm.

2. The membrane-electrode assembly according to claim 1, wherein the catalyst layer on the front side (2) and the catalyst layer on the rear side (3) of the ion-conducting membrane (1) have different planar dimensions.

3. The membrane-electrode assembly according to claim 1 or 2, wherein the catalyst layer on the front side (2) and the catalyst layer on the rear side (3) of the ion-conducting membrane (1) have the same planar dimensions.

4. The membrane-electrode assembly according to any one of claims 1 to 3, wherein the ion-conducting membrane (1) has a surface (6) which is not supported by a gas diffusion layer on the front side.

5. The membrane-electrode assembly according to any one of claims 1 to 4, wherein the catalyst layers on the front side (2) and on the rear side (3) comprise catalysts containing precious metals and, if appropriate, ion-conducting materials.

6. The membrane-electrode assembly according to any one of claims 1 to 5, wherein the ion-conducting membrane comprises organic polymers such as proton-conducting perfluorinated polymeric sulphonic acid compounds, doped polybenzimidazoles, polyether ketones, polysulphones or ion-conducting ceramic materials and has a thickness of from 10 to 200 µm.

7. The membrane-electrode assembly according to any one of claims 1 to 6, wherein the gas diffusion substrates comprise porous, electrically conductive materials such as carbon fiber paper, carbon fiber nonwovens, woven carbon fiber fabrics, metal meshes, metalized woven fabrics, etc.

8. The membrane-electrode assembly according to any one of claims 1 to 7, wherein the sealing material comprises thermoplastic polymers from the group consisting of polyethylenes, polypropylenes, polytetra-fluoroethylenes, PVDF, polyesters, polyamides, polyamide elastomers, polyimides and polyurethanes, elastomers from the group consisting of silicones, silicone elastomers, EPDM, fluoroelastomers, perfluoroelastomers, chloroprene elastomers, fluorosilicone elastomers and/or thermoset polymers from the group consisting of epoxy resins, phenolic resins and cyanoacrylates.

9. The membrane-electrode assembly according to any one of claims 1 to 7, wherein the sealing material is reinforced by chemically inert, electrically insulating inorganic materials.

10. The membrane-electrode assembly according to any one of claims 1 to 7, wherein the sealing material is integrally joined to a further plastics frame extending around the circumference of the membrane (1).

11. The membrane-electrode assembly according to any one of claims 1 to 7, wherein the sealing material comprises a plurality of layers of creep-resistant polymer materials which are joined both to one another and simultaneously to the membrane-electrode assembly by means of a layer of adhesive.

12. The membrane-electrode assembly according to claim 11, wherein polymers having a glass transition temperature (Tg) above 100°C are used as creep-resistant materials.

13. The membrane-electrode assembly according to claim 11, wherein cold curing adhesives or hot curing adhesives from the group consisting of acrylates, cyanoacrylates, epoxy resins, EVA, polyethylene, propylene, etc. can be used as adhesives.

14. A process for producing a membrane-electrode assembly according to any one of claims 1 to 13, comprising the steps of:
(a) coating the first and the second glass diffusion substrate (4, 5) with catalyst-containing ink for generating the catalyst layers (2, 3) on the respective gas diffusion substrate (4, 5),
(b) applying the catalyst-coated gas diffusion substrates (2, 4 and 3, 5) to the front side and rear side of the ion-conducting membrane (1) and joining them in order to form a membrane-electrode assembly,
(c) sealing the membrane-electrode assembly with polymeric sealing material (7) so that the edge of the gas diffusion substrates (4, 5) and the surface (6) of the ion-conductive membrane (1) which is not supported by a gas diffusion substrate are enclosed by the sealing material (7) and the sealing material impregnates the edge region (7a) of the gas diffusion substrates (4, 5) to a width of at least 0.5 mm.

15. A method for producing the membrane-electrode assembly according to any one of claims 1 to 13,
comprising the steps of:
(a) coating the ion-conductive membrane (1) on the front and rear sides with catalyst-containing ink for generating the catalyst layers (2, 3) on the ion-conductive membrane (1),
(b) applying two gas diffusion substrates (4, 5) which are not coated with a catalyst to the front side and the rear side, respectively, of the ion-conducting membrane (1) coated with the catalyst layers (2, 3) and joining them to form a membrane-electrode assembly,
(c) sealing the membrane-electrode assembly with polymeric sealing material (7) so that the edges of the gas diffusion substrates (4, 5) and the surface (6) of the ion-conductive membrane (1) which is not supported by a gas diffusion substrate are enclosed by the sealing material (7) and the sealing material impregnates the edge regions (7a) of the gas diffusion substrates (4, 5) to a width of at least 0.5 mm.

16. Use of the membrane-electrode assemblies according to any one of claims 1 to 13 for producing cell stacks for electrochemical devices, in particular for fuel cells.

## Revendications

1. Unité membrane-électrode pour des installations électrochimiques comportant une membrane de conduction des ions ayant une face avant et une face arrière (1), une première couche catalytique (2) et un premier substrat répartiteur de gaz (4) sur la face avant ainsi qu'une seconde couche catalytique (3) et un second substrat répartiteur de gaz (5) sur la face arrière, le premier substrat conducteur de gaz (4) présentant une dimension surfacique plus faible que la membrane de conduction des ions (1) et le second substrat répartiteur de gaz (5) ayant essentiellement la même dimension surfacique que la membrane (1) de conduction des ions, le bord du substrat répartiteur de gaz (4, 5) et la surface libre (6) de la membrane de conduction des ions (1) ne s'appuyant pas sur un substrat répartiteur de gaz étant entourés par un matériau d'étanchéité polymère (7), ce matériau d'étanchéité imprégnant en outre la zone de bord (7a) du substrat répartiteur de gaz (4, 5) jusqu'à une largeur d'au moins 0,5 mm.

2. Unité membrane-électrode conforme à la revendication 1, dans laquelle la couche catalytique située sur la face avant (2) et la couche catalytique située sur la face arrière (3) de la membrane de conduction des ions (1) présentent des dimensions surfaciques différentes.

3. Unité membrane-électrode conforme à la revendication 1 ou 2, dans laquelle la couche catalytique située sur la face avant (2) et la couche catalytique située sur la face arrière (3) de la membrane de conduction des ions (1) présentent la même dimension surfacique.

4. Unité membrane-électrode conforme à l'une des revendications 1 à 3, dans laquelle la membrane de conduction des ions (1) comporte sur sa face avant une surface (6) ne s'appuyant pas sur un substrat répartiteur de gaz.

5. Unité membrane-électrode conforme à l'une des revendications 1 à 4, dans laquelle les couches catalytiques situées sur la face avant (2) et sur la face arrière (3) renferment des catalyseurs contenant des métaux nobles et le cas échéant des matériaux de conduction des ions.

6. Unité membrane-électrode conforme à l'une des revendications 1 à 5, dans laquelle la membrane de conduction des ions renferme des polymères organiques tels que par exemple des composés d'acide sulfonique polymères perfluorés de conduction des protons, des polybenzimidazoles dopés, des polyéther cétones, des polysulfones ou des matériaux céramiques de conduction des ions, et présente une épaisseur de 10 à 200 µm.

7. Unité membrane-électrode conforme à l'une des revendications 1 à 6, dans laquelle le substrat répartiteur de gaz renferme des matériaux électriquement conducteurs tels que du papier de fibres de carbone, une nappe de fibres de carbone, un tissu de fibres de carbone, un réseau métallique, un tissu de fibres métallisé.

8. Unité membrane-électrode conforme à l'une des revendications 1 à 7, dans laquelle le matériau d'étanchéité renferme des polymères thermoplastiques choisis dans le groupe des polymères suivants : polyéthylène, polypropylène, polytrétrafluoréthylène, PVDF, polyester, polyamide, élastomères de polyamide, polyimide et polyuréthane, élastomères du groupe des silicones, élastomères de silicone, EPDM, élastomères fluorés, élastomères perfluorés, élastomères à base de chloroprène, élastomères à base de fluoro silicone et/ou polymères duroplastiques choisis dans le groupes des résines époxy, des résines phénol et des cyanacrylates.

9. Unité membrane-électrode conforme à l'une des revendications 1 à 7, dans laquelle le matériau d'étanchéité est renforcé par des matériaux anorganiques électriquement isolants et inertes chimiquement.

10. Unité membrane-électrode conforme à l'une des revendications 1 à 7, dans laquelle le matériau d'étanchéité est relié par une liaison par la forme avec un autre cadre en matériau synthétique entourant la membrane (1).

11. Unité membrane-électrode conforme à l'une des revendications 1 à 7, dans laquelle le matériau d'étanchéité comporte plusieurs couches de matériaux polymères résistant au fluage qui sont reliés au moyen d'une couche de matériau adhésif entre elles et également simultanément à l'unité membrane-électrode.

12. Unité membrane-électrode conforme à la revendication 11, dans laquelle on utilise en tant que matériau résistant au fluage des polymères ayant une température de transition vitreuse (Tg) supérieure à 100°C.

13. Unité membrane-électrode conforme à la revendication 11, dans laquelle on peut mettre en oeuvre en tant que matériau adhésif des adhésifs à chaud ou des adhésifs à froid choisis dans le groupe des acrylates, des cyanacrylates, des résines époxy, des EVA, des polyéthylènes, des propylènes.

14. Procédé d'obtention d'une unité membrane-électrode conforme à l'une des revendications 1 à 13, comportant les étapes consistant à :
a) recouvrir le premier et le second substrat répartiteur de gaz (4, 5) avec une encre renfermant un catalyseur pour obtenir les couches catalytiques (2, 3) respectivement sur les substrats répartiteurs de gaz (4, 5),
b) appliquer le substrat répartiteur de gaz recouvert de catalyseurs (2, 4 et 3, 5) sur la face avant ou la face arrière de la membrane de conduction des ions (1) et effectuer un assemblage pour former une unité membrane-électrode,
c) revêtir l'unité membrane-électrode avec un matériau d'étanchéité polymère (7) de sorte que le bord du substrat répartiteur de gaz (4, 5) et la surface (6) de la membrane de conduction des ions (1) ne s'appuyant pas sur un substrat répartiteur de gaz soit entourés par ce matériau d'étanchéité (7) et que le matériau d'étanchéité imprègne la zone de bord (7a) du substrat répartiteur de gaz (4, 5) jusqu'à une largeur d'au moins 0,5 mm.

15. Procédé d'obtention d'une unité membrane-électrode conforme à l'une des revendications 1 à 13, comprenant les étapes consistant à :
a) recouvrir la membrane de conduction des ions (1) sur la face avant et sur sa face arrière d'une encre renfermant un catalyseur pour obtenir les couches catalytique (2, 3) sur la membrane de conduction des ions (1),
b) appliquer deux substrats répartiteurs de gaz (4, 5) non revêtus de catalyseurs sur la face avant ou la face arrière de la membrane de conduction des ions (1) recouverte des couches catalytiques (2, 3) et réaliser un assemblage pour former une unité membrane-électrode,
c) revêtir l'unité membrane-électrode avec un matériau d'étanchéité polymère (7) de sorte que le bord du substrat répartiteur de gaz (4, 5) et la surface (6) de la membrane de conduction des ions (1) ne s'appuyant pas sur un substrat répartiteur de gaz soit entourés par ce matériau d'étanchéité (7) et que le matériau d'étanchéité imprègne la zone de bord (7a) des substrats répartiteurs de gaz (4, 5) jusqu'à une largeur d'au moins 0,5 mm.

16. Utilisation d'unité membrane-électrode conforme à l'une des revendications 1 à13, pour l'obtention d'empilement de cellules pour des dispositifs électrochimiques en particulier des piles à combustible.
